# EUROPÄISCHE PATENTANMELDUNG

(11) **EP 0 768 112 A1**
(43) Veröffentlichungstag der Anmeldung: **16.04.1997**
(21) Anmeldenummer: 96810678.1
(22) Anmeldetag: 10.10.1996
(51) Int. Cl.: B01D 65/02, B01D 61/02

(54) **Verfahren und Vorrichtung zur Reinwasserherstellung**

(30) Priorität: 16.10.1995 CH 2931/95
(71) Anmelder: Christ AG, CH-4147 Aesch (CH)
(72) Erfinder: Rychen, Philippe, 68640 Muespach-le-Haut (FR); Alonso, Samuel, 4147 Aesch (CH); Meier, Thomas, 4056 Basel (CH)
(74) Vertreter: Zimmermann, Hans, Dr.

(57) **Zusammenfassung**

Verfahren und Vorrichtung zur Reinwasserherstellung mittels Umkehrosmose, wobei zur Reinigung der semipermeablen Membran 1 periodisch Reinwasser im wesentlichen in Abwesenheit eines statischen Druckgefälles unter der Wirkung des osmotischen Druckunterschiedes von der Reinwasserseite 8 durch die Membran 1 zur Speisewasserseite 7 zurückdiffundieren gelassen wird. Diese Methode ermöglicht einen weitgehend wartungsfreien Betrieb und eine schonende und effiziente Reinigung der Membran 1, womit die Betriebs- und Membranstandzeiten deutlich verbessert werden können.

## Beschreibung

Die vorliegende Erfindung betrifft ein Verfahren zur Reinwasserherstellung mittels Umkehrosmose, in welchem zur Reinigung der Membran periodisch Reinwasser durch die Membran zurückströmen gelassen wird, sowie eine Vorrichtung zur Durchführung dieses Verfahrens.

Umkehrosmoseanlagen haben in verschiedensten Gebieten der Wasseraufbereitung breite Anwendung gefunden, wie beispielsweise bei der Entsalzung von Meerwasser oder Hartwasser, bei der Aufbereitung von Abwässern oder in der Reinstwasserherstellung in der pharmazeutischen und der Halbleiterindustrie. Hierbei wird salzhaltiges Speisewasser einem statischen Druck ausgesetzt und einem Membranmodul (Membraneinheit) mit wenigstens einer semipermeablen Membran zugeführt, wobei eine Teilmenge die Membran unter der treibenden Kraft der Druckdifferenz die Membran als Reinwasser (Permeat) passiert und die Restmenge an der Membran vorbeiströmt und das Membranmodul als Konzentrat verlässt.

Da die Membranmodule gegen Verunreinigungen und Ausfällungen empfindlich sind, wird dem Membranmodul in der Regel in Strömungsrichtung ein Vorfilter vorgeschaltet. Auch mit solchen Vorfiltern kann jedoch nicht vermieden werden, dass die semipermeablen Membranen durch Ablagerung von mikrokristallinen Salzen, Kolloiden und dergleichen allmählich verschmutzen und infolge der Salzablagerungen auf der Speisewasserseite der Membranen eine Konzentrationspolarisation auftritt, wodurch allmählich der Druckabfall zunehmen kann, die Reinwasserausbeute beeinträchtigt werden kann und schliesslich die Reinwasserqualität verschlechtert werden kann.

Um eine zufriedenstellende Reinwasserqualität und Reinausbeute über einen längeren Zeitraum aufrechterhalten zu können, muss daher die Membran periodisch - meist schon nach wenigen hundert Betriebsstunden - gereinigt werden. Zu diesem Zweck wurden verschiedene Reinigungsmittel, wie beispielsweise wässrige Lösungen von Zitronensäure und EDTA bzw. Ammoniak, enzymatische Reinigungsmittel und Wasserstoffperoxid, vorgeschlagen. Diese Methode bedingt aber einen relativ grossen Wartungsaufwand und ist insbesondere für Kleingeräte, die möglichst wartungsfrei arbeiten sollten, wenig geeignet. Zudem besteht die Gefahr, dass durch den Einsatz von Reinigungmitteln die Membraneigenschaften beeinträchtigt werden könnten und/oder Spuren von Reinigungsmitteln, die im Leitungssystem verbleiben, die Reinwasserqualität beeinträchtigen könnten.

In DE-A-2101029 wurde vorgeschlagen, in der umgekehrten Osmose, Dialyse oder Ultrafiltration den Druckunterschied zwischen den beidseits der Membran befindlichen Flüssigkeiten von Zeit zu Zeit derart zu ändern, dass die Bewegung der Moleküle durch die Membran zeitweise für eine sehr kurze Zeitdauer umgekehrt wird. Aus US-A-3654148 ist ferner ein vierstufiges Umkehrosmoseverfahren bekannt, das u.a. zur Entsalzung von salzhaltigem Wasser geeignet ist und mit dem an der Membran gebildete Mikroorganismen abgetötet werden sollen oder deren Wachstum verhindert werden soll. In den ersten drei Stufen des Verfahrens wird mittels Umkehrosmose der Salzgehalt des Wassers sukzessive reduziert, wobei der Membraneinheit vorzugsweise Filter z.B. zur Zugabe von Chemikalien, die die Ausfällung von Calcium oder anderer polyvalenter Ionen verhindern, vorgeschaltet sind. In der vierten Stufe wird kurz Reinwasser durch die Membran zurückströmen gelassen und gleichzeitig stark salzhaltiges Wasser in die Speisewasserseite der Membraneinheit eingeleitet, wodurch ein osmotischer Schock auf die Mikroorganismen ausgeübt wird. Es hat sich jedoch gezeigt, dass Ablagerungen an der Membran mit diesen beiden Methoden nur sehr unvollständig entfernt werden können und dass sich bei der Herstellung von Reinwasser aus salzhaltigem Wasser mit diesen Methoden meist keine signifikante Verlängerung der Membranstandzeiten erreichen lassen.

In WO-A-93/24212 wurde daher vorgeschlagen, die semipermeable Membran mittels eines kurzen, schwallartigen Rückstromes von Reinwasser zu reinigen. Gemäss dieser Methode wird zuerst mittels einer zeitweisen Reduzierung oder Unterbrechung des Reinwasserabflusses an der Membran eine Erhöhung des statischen Wasserdrucks auf der Reinwasserseite der Membran bewirkt und dann, nach Angleichung des statischen Wasserdrucks auf beiden Seiten der Membran, der statische Wasserdruck auf der Speisewasserseite der Membran in Zeitintervallen schlagartig gesenkt. Durch die impulsartige Absenkung des statischen Druckes auf der Speisewasserseite wird eine schwallartige Rückströmung des Reinwassers von der den höheren statischen Druck aufweisenden Reinwasserseite zur Speisewasserseite bewirkt, die die Membran von Verunreinigungen befreien soll. Während der kurzzeitigen Absenkung des statischen Wasserdrucks auf der Speisewasserseite wird der Speisewasserseite vorzugsweise vorübergehend Reinwasser oder ein geringer salzhaltiges Wasser als Speisewasser zugeführt.

Die vorbekannte Methode vermeidet zwar den Einsatz von speziellen Reinigungsmitteln. In der Praxis hat sich aber gezeigt, dass die Membran mit dieser Methode ebenfalls nur unbefriedigend gereinigt wird und im wesentlichen nur angelagerte Schmutzpartikel abgetrennt werden, während die erhöhte Konzentration an der Membranoberfläche bzw. Salzausfällungen an der Membranoberfläche nicht oder nur sehr unvollständig entfernt werden. Zudem können Druckunterschiede bekanntlich die Membran insbesondere an den Klebestellen schädigen, weshalb entweder spezielle, nicht auf dem Markt üblich erhältliche Membranen eingesetzt werden müssen oder die behauptete Verlängerung der Betriebs- und Membranstandzeiten in der Praxis in der Regel nicht erreicht werden kann.

Überraschenderweise wurde nun gefunden, dass Verunreinigungen der semipermeable Membran, und insbesondere auch durch Überschreiten des Löslichkeitsproduktes entstandene Ausfällungen, weitestgehend entfernt werden, wenn Reinwasser im wesentlichen in Abwesenheit eines statischen Druckunterschiedes zwischen der Reinwasserseite und der Speisewasserseite unter dem Einfluss des osmotischen Druckunterschiedes durch die Membran zurückdiffundiert. Um Verunreinigungen zu entfernen und Ausfällungen rückgängig zu machen, kann somit im Umkehrosmoseverfahren erzeugtes Reinwasser verwendet und der vorhandene Konzentrationsunterschied ausgenützt werden, wobei die Rückdiffusion offenbar durch die an der Membran auftretende Konzentrationspolarisation zusätzlich begünstigt wird. Ferner wurde gefunden, dass bereits vergleichsweise geringe Reinwassermengen ausreichen, um auf diese Weise einen hohen Reinigungseffekt zu erzielen.

Die Erfindung betrifft daher ein Verfahren zur Reinwasserherstellung mittels Umkehrosmose, wie in Anspruch 1 definiert, und eine Vorrichtung zur Durchführung dieses Verfahrens, wie in Anspruch 17 definiert. Bevorzugte Ausführungsarten sind in den abhängigen Ansprüchen 2-16 bzw. 18-26 beschrieben.

Das erfindungsgemässe Verfahren und die erfindungsgemässe Vorrichtung ermöglichen eine besonders schonende und zugleich äusserst effiziente Reinigung der semipermeablen Membran mit vergleichsweise geringen Reinwassermengen, wobei Druckgefälle und der bisher notwendige Wartungsaufwand und der Einsatz von Chemikalien weitestgehend vermieden und Membranstandzeiten von bis zu über einem Jahr erreicht werden können. Sie können grundsätzlich in beliebigen Anwendungen von Umkehrosmoseverfahren zum Einsatz gelangen. Infolge der weitgehenden Wartungsfreiheit sind sie für den Einsatz in Klimageräten oder zur Aufbereitung von Trinkwasser oder stärker verschmutzten Wässern mittels Kleingeräten besonders geeignet.

Die optimalen Zeitintervalle für die Reinwassererzeugung und die Membranreinigung können je nach Einsatzgebiet, verwendetem Gerät und physikalischer und chemischer Zusammensetzung des Speisewassers variieren und können von Fall zu Fall leicht ermittelt werden. Im Falle von Klimageräten und Kleingeräten zur Trinkwasseraufbereitung können beispielsweise die Intervalle zur Reinwassererzeugung typischerweise etwa eine bis mehrere Stunden und die Intervalle zur Membranreinigung etwa 5 bis 30 Minuten betragen und auf diese Weise meist ein wartungsfreier Betrieb von zu einem Jahr erreicht werden. Generell sollten jedoch die Intervalle für die Membranreinigung, d.h. die Zeitdauer, während der Reinwasser durch die Membran zurückdiffundiert, mindestens etwa 5 Minuten, vorzugsweise mindestens etwa 10 Minuten, betragen, um Ausfällungen, die durch Überschreiten des Löslichkeitsproduktes gebildet wurden, wirksam zu entfernen. Die Intervalle können jedoch auch wesentlich länger sein; Reinigungsintervalle über 30 Minuten ergeben aber in der Regel keine wesentliche weitere Verbesserung mehr, weshalb die Reinigungsdauer aus ökonomischen Gründen vorzugsweise meist nicht mehr als 30 Minuten betragen sollte.

Die Formulierungen" im wesentlichen in Abwesenheit eines statischen Druckgefälles" und "im wesentlichen vom statischen Druck entlastet" sind im Rahmen der vorliegenden Erfindung so zu verstehen, dass das statische Druckgefälle bzw. der statische Restdruck im Vergleich zum osmotischen Druckgefälle gering ist und die Rückdiffusion im wesentlichen nur unter der Wirkung des osmotischen Druckes erfolgt.

Die erfindungsgemäss verwendete Membraneinheit kann grundsätzlich ein beliebiges, in der Umkehrosmose verwendbares Membranmodul, beispielsweise ein Plattenmodul und vorzugsweise ein Wickelmodul sein.

Der absolute Wert der Reinwasserausbeute ist für die Erfindung nicht kritisch. Sie kann vorzugsweise mittels eines in der Konzentratabflussleitung angeordneten Regelventils, mit dem der Druckabfall und somit der WCF-Wert (water conversion factor) gesteuert werden kann, eingestellt werden. Typische Reinwasserausbeuten betragen etwa 50-80% bei der Aufbereitung von Hartwasser bzw. etwa 70-95% bei der Aufbereitung von enthärtetem Wasser.

Die erfindungsgemässe Membranreinigung in Abwesenheit eines statischen Druckgefälles kann vorzugsweise so erfolgen, dass die Reinwasserseite und die Speisewasserseite der Membraneinheit im wesentlichen vom statischen Druck entlastet werden. Der Druckabbau auf der Speisewasserseite kann am einfachsten durch Unterbrechung der Speisewasserzufuhr mittels Schliessen eines in der Speisewasserleitung angeordneten Sperrventils erfolgen.

Um die während der Reinigung der Membran von der Reinwasserseite zur Speisewasserseite zurückdiffundierende Reinwassermenge zu ersetzen, ist vorzugsweise ein über eine Verbindungsleitung an die Reinwasserseite angeschlossener Reinwasserbehälter vorgesehen, aus dem Reinwasser zur Reinwasserseite zurückfliessen kann und der während der Erzeugung von Reinwasser wieder aufgefüllt wird. Der Reinwasserbehälter kann beispielsweise ein offener oder geschlossener Speicher, ein Spülbehälter mit konstantem Volumen oder ein Spülbehälter aus flexiblem, nicht dehnbarem Material sein, das bei Abgabe von Reinwasser unter Veränderung des Voluen/Oberflächen-Verhältnisses allmählich erschlafft, ohne auf das Reinwasser einen wesentlichen statischen Druck auszuüben. Das bei der Reinigung der Membran zur Reinwasserseite zurückfliessende Wasser fällt ohne besondere Massnahmen im wesentlichen drucklos an, wenn der Reinwasserbehälter ein offener Speicher oder ein aus einem flexiblen, nicht dehnbaren Material bestehender Spülbehälter ist.

Ein Reinwasserspeicher, aus dem über wenigstens eine an den Reinwasserspeicher angeschlossene Zapfstelle Reinwasser entnommen werden kann, ist vorzugsweise auch dann vorgesehen, wenn für die Aufnahme und Rückführung der zur Reinigung der Membran benötigten Reinwassermenge ein separater Spülbehälter vorgesehen ist. Ist der Reinwasserspeicher ein offener Speicher, so ist in der Verbindungsleitung zwischen dem Speicher und der Zapfstelle vorzugsweise eine Pumpe angeordnet, um das Reinwasser unter ausreichendem Druck zur Zapfstelle zu transportieren.

Vorzugsweise kann der Reinwasserspeicher ein geschlossener Speicher sein, in dem Reinwasser unter Druck gespeichert werden kann und der über eine mit einem Rückschlagventil versehene Reinwasserleitung mit der Reinwasserseite der Membraneinheit verbunden ist. Während der Erzeugung von Reinwasser fliesst Reinwasser unter Druck von der Reinwasserseite der Membraneinheit über die Reinwasserleitung in den Speicher. Fällt der Druck auf der Reinwasserseite der Membraneinheit unter den Druck im Reinwasserspeicher, schliesst das Rückschlagventil, womit ein Rückfliessen von Reinwasser aus Speicher während der Reinigung der Membran verhindert wird.

Wird jedoch das Rückschlagventil durch eine Bypassleitung mit einem Drosselventil überbrückt, so können während der Reinigung der Membran geringe Menge an Reinwasser über die Bypassleitung zur Reinwasserseite der Membraneinheit zurückfliessen, womit der geschlossene Reinwasserspeicher zugleich als Reinwasserbehälter zur Aufnahme und Rückführung von Reinwasser dienen kann. In dieser Ausführungsform ist in der Reinwasserleitung oder in einer Abzweigungsleitung der Reinwasserleitung zwischen der Bypassleitung und dem Membranmodul vorzugsweise ein Entlastungsventil vorgesehen, das während der Reinigung der Membran geöffnet und während der Erzeugung von Reinwasser geschlossen ist, und das Drosselventil ist vorzugsweise so dimensioniert, dass während der Reinigung der Membran geringfügig höhere Mengen an Reinwasser durch das Drosselventil zurückfliessen als von der Reinwasserseite zur Speisewasserseite zurückdiffundieren, wobei die überschüssige Menge über das Entlastungsventil abfliessen kann.

Anstelle einer Bypassleitung kann vorzugsweise in der Reinwasserleitung oder in einer Abzweigungsleitung der Reinwasserleitung zwischen der Membraneinheit und dem Rückschlagventil ein Spülbehälter angeordnet werden, in den während der Reinwassererzeugung Reinwasser fliesst und aus dem während der Reinigung der Membran Reinwasser zur Reinwasserseite der Membraneinheit zurückfliesst. Der Spülbehälter kann vorzugsweise aus einem flexiblen, nicht dehnbaren Material bestehen und/oder an seinem oberen Ende ein Entlastungsventil oder eine Leitung mit einem Entlastungsventil aufweisen, das während der Reinigung der Membran geöffnet ist und während der Erzeugung von Reinwasser geschlossen wird, sobald der Spülbehälter ausreichend mit Reinwasser gefüllt ist. Ein Spülbehälter aus flexiblem, nicht dehnbarem Material kann vorzugsweise in der Reinwasserleitung zwischen der Membraneinheit und dem Rückschlagventil angeordnet werden. Ein Spülbehälter mit einem Entlastungsventil kann vorzugsweise in einer zwischen der Membraneinheit und dem Rückschlagventil an die Reinwasserleitung angeschlossenen Abzweigungsleitung angeordnet sein, wobei die Abzweigungsleitung zwischen dem Spülbehälter und der Reinwasserleitung vorzugsweise ein Ventil aufweist, das schliesst, wenn Luft angesaugt wird, um zu vermeiden, dass Luft in das Leitungssystem eindringt.

Für die vorangehenden Ausführungsformen eignen sich grundsätzlich beliebige, dem Fachmann geläufige geschlossene Speicher. Bevorzugt sind jedoch Speicher mit einer flexiblen Membran, die den Speicher in eine Reinwasserkammer und eine Druckkammer unterteilt.

Vorzugsweise kann in den vorangehenden Ausführungsformen der Wasserdruck im Reinwasserspeicher mittels eines am Reinwasserspeicher oder in der Reinwasserleitung zwischen dem Rückschlagventil und dem Reinwasserspeicher angeordneten Druckfühlers gemessen und das Sperrventil so geschaltet werden, dass das Sperrventil in der Speisewasserleitung geschlossen wird, wenn der gemessene Druck einen festgelegten oberen Wert erreicht, bzw. das Sperrventil geöffnet wird, wenn der gemessene Druck einen festgelegten unteren Wert erreicht.

Gewünschtenfalls kann vor und/oder nach der Reinigung der Membran die Speisewasserseite der Membraneinheit mit Speisewasser gespült werden, um Verunreinigungen, die sich auf der Speisewasserseite abgelagert haben, zu entfernen. Zu diesem Zweck wird vorzugsweise in der Reinwasserleitung stromabwärts unmittelbar nach der Membraneinheit ein Sperrventil vorgesehen. Erfolgt beispielsweise die Spülung der Speisewasserseite vor der Reinigung der Membran, so wird, wenn der mittels des Druckfühlers gemessene Druck einen festgelegten oberen Wert erreicht, das Sperrventil in der Reinwasserleitung geschlossen und nach einem zur Spülung der Speisewasserseite ausreichenden Zeitintervall das Sperrventil in der Speisewasserleitung geschlossen und das Sperrventil in der Reinwasserleitung wieder geöffnet bzw., wenn der mittels des Druckfühlers gemessene Druck einen festgelegten unteren Wert erreicht, (bei geöffnetem Sperrventil in der Reinwasserleitung) das Sperrventil in der Speisewasserleitung geöffnet.

Gewünschtenfalls kann ferner in der Speisewasserleitung zwischen dem Sperrventil und der Membraneinheit eine Hochdruckpumpe angeordnet werden. Um zu vermeiden, dass die Pumpe kavitiert, solange der nötige Vordruck nicht vorhanden ist, wird die Pumpe vorzugsweise jeweils zeitverzögert zum Öffnen des Sperrventils eingeschaltet. Vorzugsweise kann der Pumpe ferner ein Druckschalter vorgeschaltet werden, der die Pumpe abschaltet bzw. ein Einschalten der Pumpe verhindert, wenn der Vordruck zu niedrig ist. Erfolgt vor der Reinigung der Membran eine Spülung der Speisewasserseite der Membraneinheit, so kann bei Verwendung einer Hochdruckpumpe gewünschtenfalls auf ein Sperrventil in der Reinwasserleitung verzichtet werden, und die Hochdruckpumpe und das Sperrventil in der Speisewasserleitung können in Abhängigkeit des mittels des Druckfühlers gemessenen Drukkes so geschaltet werden, dass die Hochdruckpumpe ausgeschaltet und nach einem zur Spülung der Speisewasserseite der Membraneinheit ausreichenden Zeitintervall das Sperrventil geschlossen wird, wenn der Druck einen festgelegten oberen Wert erreicht, bzw. das Sperrventil geöffnet und die Hochdruckpumpe eingeschaltet wird, wenn der Druck einen festgelegten unteren Wert erreicht. Wird auf eine Spülung der Speisewasserseite verzichtet, so wird das Sperrventil in der Speisewasserleitung geschlossen, wenn die Hochdruckpumpe ausgeschaltet wird.

Wird anstelle eines geschlossenen Reinwasserspeichers ein offener Reinwasserspeicher verwendet, der über eine Reinwasserleitung mit der Reinwasserseite der Membraneinheit verbunden ist, so fliesst bei geöffnetem Sperrventil der Speisewasserleitung Reinwasser von der Reinwasserseite über die Reinwasserleitung in den Reinwasserspeicher, während bei geschlossenem Sperrventil der Speisewasserleitung Reinwasser aus dem Speicher im wesentlichen ohne Druckgefälle zur Reinwasserseite zurückfliessen kann, solange allfällige Höhenunterschiede zwischen der Membraneinheit und der Speicher nicht allzu gross sind. Der Reinwasserspeicher weist vorzugsweise einen Niveaufühler auf zur Kontrolle der im Speicher vorhandenen Reinwassermenge, wobei das Sperrventil in der Speisewasserleitung geschlossen wird, wenn die Reinwassermenge einen festgelegten oberen Wert erreicht, bzw. das Sperrventil geöffnet wird, wenn die Reinwassermenge einen festgelegten unteren Wert erreicht. Es versteht sich, dass die Reinwasserleitung unterhalb dieses unteren Niveaus an den Speicher angeschlossen bzw. bis unter dieses untere Niveau in das Reinwasser eintauchen sollte, um zu vermeiden, dass Luft in die Reinwasserleitung eindringen kann.

Gewünschtenfalls kann in der Speisewasserleitung zwischen dem Sperrventil und der Membraneinheit eine Hochdruckpumpe angeordnet werden. Ferner kann gewünschtenfalls vor und/oder nach der Reinigung der Membran eine Spülung der Speisewasserseite der Membraneinheit erfolgen. Wird beispielsweise eine Hochdruckpumpe verwendet, aber auf eine Spülung der Speisewasserseite verzichtet, so wird zweckmässigerweise die Hochdruckpumpe eingeschaltet, wenn das Sperrventil der Speisewasserleitung geöffnet wird, bzw. ausgeschaltet, wenn das Sperrventil geschlossen wird. Erfolgt beispielsweise vor der Reinigung der Membran ein Spülung der Speisewasserseite, so wird in der Reinwasserleitung zweckmässigerweise ein Sperrventil angeordnet, und die Sperrventile und eine gegebenenfalls vorhandene Hochdruckpumpe werden in Abhängigkeit der im Reinwasserspeicher vorhandenen Reinwassermenge vorzugsweise so geschaltet, dass das Sperrventil in der Reinwasserleitung geschlossen und eine allenfalls vorhandene Hochdruckpumpe ausgeschaltet wird, wenn die Reinwassermenge einen festgelegten oberen Wert erreicht, und nach einem zur Spülung der Speisewasserseite ausreichenden Zeitintervall das Sperrventil in der Speisewasserleitung geschlossen und das Sperrventil in der Reinwasserleitung geöffnet wird bzw., wenn die Reinwassermenge einen festgelegten unteren Wert erreicht, (bei geöffnetem Sperrventil in der Reinwasserleitung) das Sperrventil in der Speisewasserleitung geöffnet und eine gegebenenfalls vorhandene Hochdruckpumpe eingeschaltet wird.

Vorzugsweise kann in den vorangehend erläuterten Ausführungsformen jeweils in der Reinwasserleitung oder am Reinwasserspeicher eine Leitfähigkeitsmessonde zur Überwachung der Reinwasserqualität vorgesehen werden. Gewünschtenfalls kann die Vorrichtung so geschaltet werden, dass eine Reinigung der Membran ausgelöst wird, wenn die Leitfähigkeit über einen festgelegten Wert ansteigt.

Weitere Merkmale der Erfindung ergeben sich aus der folgenden Beschreibung der in den Abbildungen gezeigten Ausführungsbeispiele.

In schematischer Darstellung zeigen
- Fig. 1: eine Vorrichtung mit einem in einer Abzweigungsleitung angeordneten Spülbehälter,
- Fig. 2: eine Vorrichtung mit einem in der Reinwasserleitung angeordneten Spülbehälter aus flexiblem, nicht dehnbarem Material,
- Fig. 3: eine Vorrichtung, in der zwischen der Reinwasserseite der Membraneinheit und einem Reinwasserdruckspeicher ein durch eine Bypassleitung mit einem Drosselventil überbrücktes Rückschlagventil angeordnet ist, und
- Fig. 4: eine Vorrichtung mit einem offenen Reinwasserspeicher.

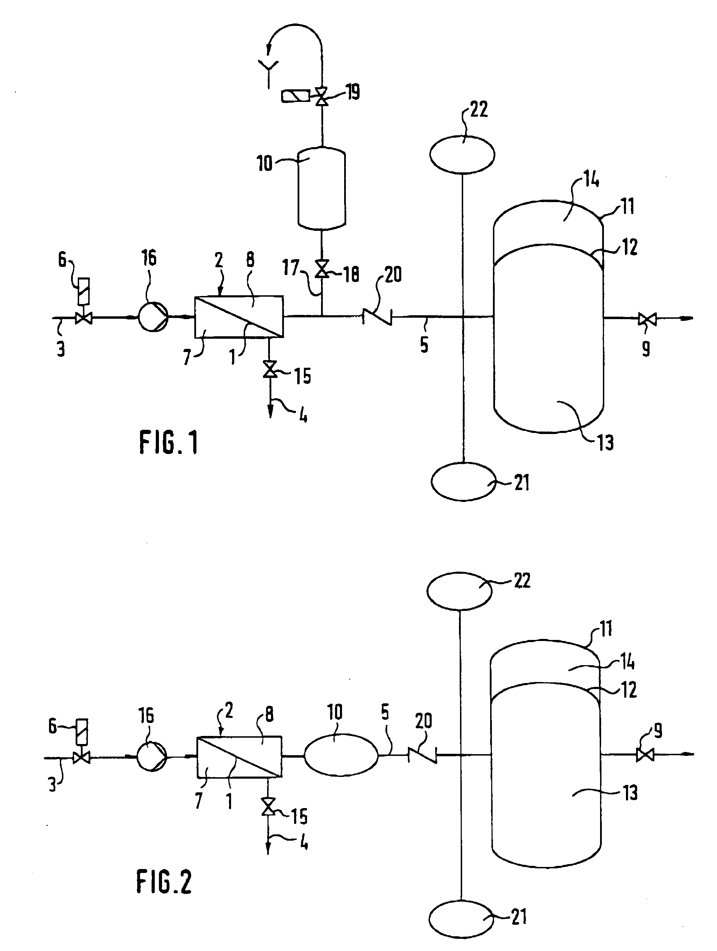

Figuren 1 bis 4 zeigen jeweils eine Membraneinheit (Umkehrosmose-Membraneinheit) 2 mit wenigstens einer semipermeablen Membran 1, die die Membraneinheit 2 in eine Speisewasserseite (Primärseite) 7 und eine Reinwasserseite (Sekundärseite) 8 unterteilt. Über eine an die Speisewasserseite 7 der Membraneinheit 2 angeschlossene Speisewasserleitung 3 wird der Membraneinheit 2 unter Druck Speisewasser zugeführt, wobei die Speisewasserzufuhr durch Schliessen eines in der Speisewasserleitung 3 angeordneten Sperrventils 6 unterbrochen werden kann. Eine Teilmenge des der Membraneinheit 2 zugeführten Speisewassers passiert die Membran 1 als Reinwasser und fliesst über eine an die Reinwasserseite 8 der Membraneinheit 2 angeschlossene Reinwasserleitung 5 zu einem Reinwasserspeicher 11 bzw. 25, an den über eine Verbindungsleitung wenigstens eine Zapfstelle 9 zur Entnahme von Reinwasser angeschlossen ist. Die an der Membran 1 vorbeiströmende Restmenge des Speisewassers verlässt die Membraneinheit 2 als Konzentrat über eine an die Speisewasserseite 7 der Membraneinheit 2 angeschlossene Konzentratabflussleitung 4, in der ein Regelventil 15 (im folgenden auch als "WCF-ventil" bezeichnet) zur Steuerung des Druckabfalls angeordnet ist, mit dem das Verhältnis der Durchflussrate des Reinwassers zur Durchflussrate des Speisewassers und somit die Reinwasserausbeute (water conversion factor) auf den gewünschten Wert eingestellt werden kann.

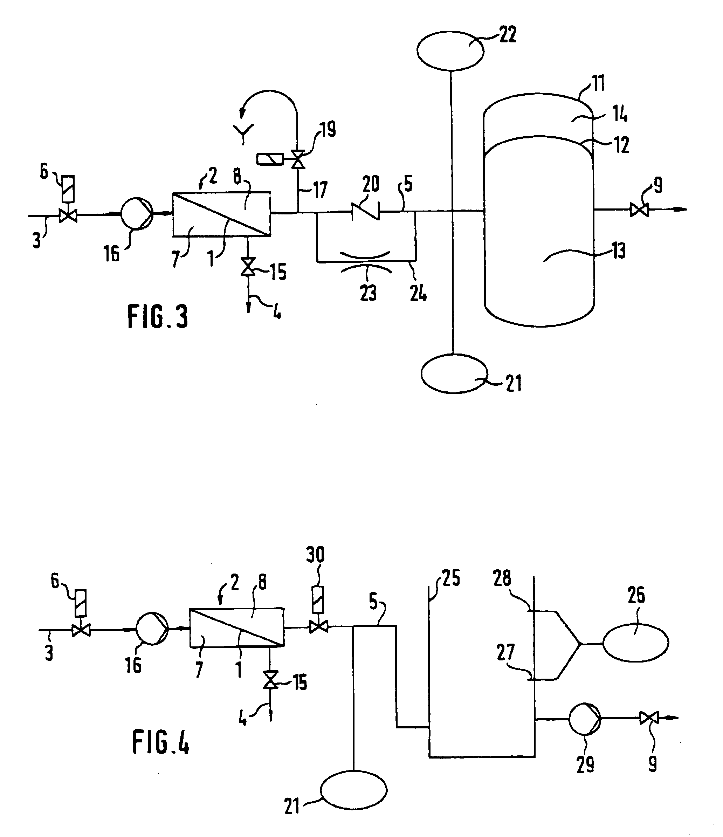

Der Reinwasserspeicher kann - wie in den Figuren 1 bis 3 gezeigt - ein geschlossener Speicher 11, in dem Reinwasser unter Druck gespeichert werden kann, oder - wie in Figur 4 gezeigt - ein offener Speicher 25 sein. Als geschlossene Reinwasserspeicher 11 eignen sich grundsätzlich beliebige, geschlossene Speicher, wie sie dem Fachmann bestens geläufig sind. Vorzugsweise kann der geschlossene Speicher 11 jedoch als ein dem Fachmann ebenfalls geläufiges "Membrandruckgefäss" ausgestaltet sein, d.h. als Speicher, der durch eine flexible Membran 12 in eine Reinwasserkammer 13 und eine Druckkammer 14 unterteilt ist. Bei Verwendung eines offenen Reinwasserspeichers 25 ist es in der Regel erforderlich, in der Verbindungleitung zwischen dem Speicher 25 und der wenigstens einen Zapfstelle eine Pumpe 29 anzuordnen, um das Reinwasser unter ausreichendem Druck zur Zapfstelle 9 zu transportieren. Eine Pumpe kann allenfalls fehlen, wenn das Reinwasser aus dem Speicher 25 zu tiefer gelegenen Zapfstellen 9 abfliessen kann.

Die in Figur 1 gezeigte Vorrichtung weist in einer zwischen der Membraneinheit 2 und dem Rückschlagventil 20 an die Reinwasserleitung 5 angeschlossenen Abzweigungsleitung 17 einen Spülbehälter 10 auf, der zur Aufnahme der für die Reinigung der semipermeablen Membran 1 benötigten Reinwassermenge dient und aus dem Reinwasser bei unterbrochener Speisewasserzufuhr durch die Membran 1 zur Speisewasserseite 7 zurückdiffundieren kann. Während des nächsten Produktionszyklus fliesst eine Teilmenge des die semipermeable Membran 1 passierenden Reinwassers in den Spülbehälter 10, wo sie für den nächsten Reinigungsschritt zur Verfügung steht, und die Restmenge fliesst in einen Reinwasserspeicher 11.

Beim Öffnen des Ventils 9 einer Zapfstelle fliesst Reinwasser unter Druck aus der Reinwasserkammer 13 des Reinwasserspeichers 11 über eine Verbindungsleitung zur Zapfstelle 9. Erreicht der Druck des gespeicherten Reinwassers, der mittels eines Druckfühlers 22 am Reinwasserspeicher 11 oder in der Reinwasserleitung 5 zwischen dem Rückschlagventil 20 und dem Reinwasserspeicher 11 gemessen werden kann, einen festgelegten unteren Wert, wird das Sperrventil 6 in der Speisewasserleitung 3 geöffnet, womit die Reinwasserproduktion beginnt. Speisewasser strömt nun unter Druck in die Membraneinheit 2 und wird in einen Reinwasserstrom und einen Konzentratstrom aufgeteilt, die über die Reinwasserleitung 5 bzw. die Konzentratabflussleitung 4 abfliessen. Die Reinwasserausbeute ist durch die Einstellung des WCF-Ventils 15 vorgegeben. Durch Öffnen eines am oberen Ende des Spülbehälters 10 direkt oder über eine Verbindungsleitung angeschlossenen Entlastungsventils 19 fliesst bei offenem Kontrollventil 18 Reinwasser über die Abzweigungsleitung 17 in den Spülbehälter 10. Vorzugsweise kann das Öffnen des Entlastungsventils 19 und, sofern Kontrollventil 18 geschlossen ist, das Öffnen des Kontrollventils 18 gleichzeitig mit dem Öffnen des Sperrventils 6 erfolgen. Nach einer festgelegten Zeitspanne, die ausreicht, um eine genügende Menge an Reinwasser in den Spülbehälter 10 zu leiten, wird das Entlastungsventil 19 geschlossen. Reinwasser fliesst nun über die Reinwasserleitung 5 in die Reinwasserkammer 13 des Reinwasserspeichers 11, von wo es bei geöffnetem Ventil 9 zum Bezüger weiter fliesst. Die Restleitfähigkeit des Reinwassers kann mittels einer Leitfähigkeitsmessonde 21 überwacht werden, die vorzugsweise am Reinwasserspeicher 11 oder in der Reinwasserleitung 5 zwischen dem Rückschlagventil 20 und dem Reinwasserspeicher 11 angeordnet ist. Wird Ventil 9 geschlossen, wird das produzierte Reinwasser im Reinwasserspeicher 11 gespeichert, bis der mittels Druckfühler 22 gemessene Druck einen festgelegten oberen Wert, der niedriger als der Druck des der Membraneinheit 2 zugeführten Speisewassers ist, erreicht, und dann die Reinwasserproduktion unterbrochen.

Nach der Unterbrechung der Reinwasserproduktion kann gewünschtenfalls zuerst die Speisewasserseite 7 der Membraneinheit 2 von kolloidalen Verunreinigungen gereinigt werden. Zu diesem Zweck wird in der Reinwasserleitung 5 zwischen der Membraneinheit 2 und der Abzweigungsleitung 17 vorzugsweise ein in Figur 1 nicht gezeigtes Sperrventil angeordnet, das während der Reinwasserproduktion und während der Reinigung der Membran geöffnet ist und das nun zur Unterbrechung der Reinwasserproduktion geschlossen wird. Auf diese Weise fliesst die gesamte der Membraneinheit 2 zugeführte Speisewassermenge an der Membran 1 vorbei und spült allfällige Verunreinigungen auf der Speisewasserseite 7 der Membraneinheit 2 über die Konzentratabflussleitung 4 aus der Membraneinheit 2. Ein Sperrventil in der Reinwasserleitung 5 erübrigt hingegen sich, wenn die Reinwasserproduktion solange aufrechterhalten wird, bis der maximal mögliche Druck erreicht ist, oder wenn auf eine Spülung der Speisewasserseite 7 verzichtet wird.

Zur Unterbrechung des Spülvorgangs bzw. zur Unterbrechung der Reinwasserproduktion, wenn keine Spülung der Speisewasserseite 7 erfolgt, wird Sperrventil 6 geschlossen und Entlastungsventil 19 geöffnet. Ein allenfalls in der Reinwasserleitung 5 angeordnetes Sperrventil wird wieder geöffnet. Die Speisewasserseite 7 und die Reinwasserseite 8 der Membraneinheit 2 und der Spülbehälter 10 werden dadurch vom statischen Druck entspannt, wobei gleichzeitig das Rückschlagventil 20 schliesst und damit im Reinwasserspeicher 11 den Druck aufrechterhält. Unter dem Einfluss des osmotischen Druckunterschiedes beginnt nun Reinwasser von der Reinwasserseite 8 durch die semipermeable Membran 1 zur Speisewasserseite 7 zurückzudiffundieren, wobei Reinwasser vom Spülbehälter 10 zur Reinwasserseite 8 der Membraneinheit 2 nachfliesst. Nach Ausgleich der Konzentrationen auf der Speisewasser- und Reinwasserseite stoppt die Rückdiffusion automatisch. Um zu verhindern, dass Luft in das Leitungssystem eindringt, ist in der Abzweigungsleitung 17 zwischen der Reinwasserleitung 5 und dem Spülbehälter 10 ein Kontrollventil 18 angeordnet, das schliesst, sobald Luft aus dem Spülbehälter 10 angesaugt würde, womit die Rückdiffusion ebenfalls gestoppt wird. Desgleichen wird die Rückdiffusion gestoppt, wenn der Druck im Reinwasserspeicher den festgelegten unteren Wert erreicht und Sperrventil 6 und ein allenfalls geschlossenes Kontrollventil 18 wieder geöffnet werden, womit ein neuer Zyklus zur Produktion von Reinwasser beginnt.

Wenn das Speisewasser unter ausreichendem Druck zur Verfügung steht, kann im Prinzip auf eine Hochdruckpumpe 16 verzichtet und das Verfahren in der vorangehend beschriebenen Weise durchgeführt werden. Weist die Vorrichtung - wie in Figur 1 gezeigt - in der Speisewasserleitung 3 zwischen dem Sperrventil 6 und der Membraneinheit 2 eine Hochdruckpumpe auf, so unterscheidet sich das Verfahren vom vorangehend beschriebenen lediglich insofern, als auf ein Sperrventil in der Reinwasserleitung 5 verzichtet werden kann und die Hochdruckpumpe 16 bei Unterbrechung der Reinwasserproduktion ausgeschaltet und bei Aufnahme bzw. Wiederaufnahme der Reinwasserproduktion zeitverzögert zum Öffnen des Sperrventil 6 eingeschaltet wird. Eine geringe Zeitverzögerung bis zum Einschalten der Hochdruckpumpe 16 ist angezeigt, um zu vermeiden, dass die Pumpe kavitiert, solange der nötige Vordruck nicht vorhanden ist. Um die Pumpe zusätzlich zu schützen, kann in der Speisewasserleitung zwischem dem Sperrventil 6 und der Hochdruckpumpe 16 vorzugsweise ein Druckfühler angeordnet werden, der die Pumpe ausschaltet bzw. ein Einschalten der Pumpe verhindert, wenn der Druck einen festgelegten unteren Wert nicht erreicht.

Die in Figur 2 gezeigte Vorrichtung unterscheidet sich von der in Figur 1 gezeigten im wesentlichen nur dadurch, dass der Spülbehälter 10 in der Reinwasserleitung 5 angeordnet ist und aus einem flexiblen, aber im wesentlichen nicht dehnbaren Material besteht.

Beim Öffnen des Ventils 9 einer Zapfstelle fliesst in der in Figur 2 gezeigten Vorrichtung Reinwasser unter Druck aus der Reinwasserkammer 13 des Reinwasserspeichers 11 über eine Verbindungsleitung zur Zapfstelle 9. Sobald der Druck des gespeicherten Reinwassers, der mittels eines Druckfühlers 22 im Reinwasserspeicher 11 oder in der Reinwasserleitung 5 zwischen dem Rückschlagventil 20 und dem Reinwasserspeicher 11 gemessen wird, einen festgelegten unteren Wert erreicht, wird das Sperrventil 6 in der Speisewasserleitung 3 geöffnet. Speisewasser strömt nun unter Druck in die Membraneinheit 2 und wird dort in einen Reinwasserstrom und einen Konzentratstrom aufgeteilt, wobei die Reinwasserausbeute durch die Einstellung des WCF-Ventils 15 bestimmt wird. Das Reinwasser strömt von der Reinwasserseite 8 der Membraneinheit 2 über die Reinwasserleitung 5 zum Spülbehälter 10 und zum Reinwasserspeicher 11, von wo es zum Verbraucher weiter fliessen kann; das Konzentrat fliesst über die Konzentratabflussleitung 4 ab. Wird Ventil 9 geschlossen, wird das produzierte Reinwasser im Spülbehälter 10 und im Reinwasserspeicher 11 gesammelt, wobei die im Spülbehälter 10 gespeicherte Reinwassermenge durch desses Fassungsvermögen begrenzt ist und die Restmenge in den Reinwasserspeicher 11 fliesst. Die Überwachung der Restleitfähigkeit des Reinwassers kann mittels einer Leitfähigkeitsmessonde 21 erfolgen, die vorzugsweise am Reinwasserspeicher 11 oder in der Reinwasserleitung 5 zwischen dem Rückschlagventil 20 und dem Reinwasserspeicher 11 angeordnet ist. Wenn der mittels Druckfühler 22 gemessene Druck einen festgelegten oberen Wert erreicht, der niedriger als der Druck des der Membraneinheit 2 zugeführten Speisewassers ist, wird die Reinwasserproduktion unterbrochen.

Nach der Unterbrechung der Reinwasserproduktion kann gewünschtenfalls zuerst die Speisewasserseite 7 der Membraneinheit 2 von kolloidalen Verunreinigungen gereinigt werden. Zur Durchführung dieser Spülung der Speisewasserseite 7 ist in der Reinwasserleitung 5 zwischen der Membraneinheit 2 und dem Spülbehälter 10 vorzugsweise ein in Figur 2 nicht gezeigtes Sperrventil angeordnet, das während der Reinwasserproduktion geöffnet ist und das nun zur Unterbrechung der Reinwasserproduktion geschlossen wird. Dadurch fliesst die gesamte der Membraneinheit 2 zugeführte Speisewassermenge an der semipermeablen Membran 1 vorbei zur Konzentratabflussleitung 4 und spült allfällige Verunreinigungen aus. Ein Sperrventil in der Reinwasserleitung 5 erübrigt sich jedoch, wenn auf eine Spülung der Speisewasserseite 7 verzichtet wird oder wenn die Reinwasserproduktion bis zur Erreichung des maximal möglichen Reinwasserdruckes fortgesetzt wird und dann die gesamte Speisewassermenge von selbst an der Membran 1 vorbei zur Konzentratabflussleitung geleitet wird.

Zur Unterbrechung des Spülvorgangs bzw. zur Unterbrechung der Reinwasserproduktion, wenn keine Spülung der Speisewasserseite 7 erfolgt, wird Sperrventil 6 geschlossen. Ein allenfalls in der Reinwasserleitung 5 angeordnetes Sperrventil wird wieder geöffnet. Durch das Schliessen des Sperrventils 6 wird die Speisewasserseite 7 vom statischen Druck entlastet. Da Wasser inkompressibel ist, genügt bereits eine sehr geringe, durch die Membran 1 zurückfliessende Reinwassermenge, um fast augenblicklich den statischen Druck des Reinwassers zwischen der Reinwasserseite 8 und dem Rückschlagventil 20 vollständig abzubauen. Gewünschtenfalls kann am Spülbehälter 10 oder in der Reinwasserleitung 5 zwischen der Membraneinheit 2 und dem Rückschlagventil 20 ein Entlastungsventil angeordnet werden (wie in Figur 1 bzw. 3 gezeigt), das gleichzeitig mit dem Sperrventil 6 kurz geöffnet und wieder geschlossen wird, womit die Speisewasserseite 7 und die Reinwasserseite 8 gleichzeitig vom statischen Druck entlastet werden. Infolge des Druckabfalls auf der Reinwasserseite 8 schliesst das Rückschlagventil 20 und hält damit den statischen Druck im Reinwasserspeicher 11 aufrecht. Reinwasser diffundiert nun unter dem Einfluss des osmotischen Druckunterschiedes von der Reinwasserseite 8 durch die semipermeable Membran 1 zur Speisewasserseite 7, wobei Reinwasser vom Spülbehälter 10 unter allmählicher Erschlaffung des flexiblen Spülbehälters 10 zur Reinwasserseite 8 nachfliesst. Die Rückdiffusion von Reinwasser stoppt automatisch, wenn die Konzentrationen auf der Speisewasserseite 7 und der Reinwasserseite 8 ausgeglichen sind oder die im Spülbehälter 10 gespeicherte Reinwassermenge verbraucht ist. Desgleichen wird die Rückdiffusion gestoppt, wenn der Druck im Reinwasserspeicher 11 den festgelegten unteren Wert erreicht und Sperrventil 6 geöffnet wird, womit die Reinwasserproduktion von neuem beginnt.

Auf die in Figur 2 gezeigte Hockdruckpumpe 16 kann gewünschtenfalls verzichtet und das Verfahren in der vorangehend beschriebenen Weise druchgeführt werden, wenn das Speisewasser unter ausreichendem Druck zur Verfügung steht. Bei Verwendung einer Hochdruckpumpe 16 unterscheidet sich das Verfahren vom vorangehend beschriebenen lediglich insofern, als auf ein Sperrventil in der Reinwasserleitung 5 und auf ein Entlastungsventil verzichtet werden kann und die Hochdruckpumpe 16 bei der Unterbrechung der Reinwasserproduktion ausgeschaltet und bei der Aufnahme bzw. Wiederaufnahme der Reinwasserproduktion zeitverzögert zum Öffnen des Sperrventils 6 eingeschaltet wird. Durch das zeitverzögerte Einschalten der Hochdruckpumpe 16 wird vermieden, dass die Pumpe kavitiert, solange der nötige Vordruck nicht vorhanden ist. Um die Pumpe zusätzlich zu schützen, kann in der Speisewasserleitung zwischen dem Sperrventil 6 und der Hockdruckpumpe 16 vorzugsweise ein Druckfühler vorgesehen werden, der die Pumpe ausschaltet bzw. ein Einschalten der Pumpe verhindert, wenn der Druck einen festgelgten unteren Wert nicht erreicht.

Figur 3 zeigt eine Vorrichtung, bei der Reinwasser zur Reinigung der semipermeablen Membran 1 aus dem Reinwasserspeicher 11 über eine Bypassleitung 24 mit einem Drosselventil 23, die das in der Reinwasserleitung 5 angeordnete Rückschlagventil 20 überbrückt, zurückfliessen kann.

Beim Öffnen des Ventils 9 einer Zapfstelle der in Figur 3 gezeigten Vorrichtung fliesst Reinwasser unter Druck aus der Reinwasserkammer 13 des Reinwasserspeichers 11 über eine Verbindungsleitung zur Zapfstelle 9. Erreicht der Druck des gespeicherten Reinwassers, der mittels eines Druckfühlers 22 im Reinwasserspeicher 11 oder in der Reinwasserleitung 5 zwischen dem Rückschlagventil 20 und dem Reinwasserspeicher 11 gemessen werden kann, einen festgelegten unteren Wert, wird das Sperrventil 6 in der Speisewasserleitung 3 geöffnet, womit Speisewasser unter Druck in die Membraneinheit 2 strömt und in einen Reinwasserstrom und einen Konzentratstrom aufgeteilt wird. Die Reinwasserausbeute ist durch die Einstellung des WCF-Ventils 15 vorgegeben. Das Reinwasser fliesst über die Reinwasserleitung 5 in den Reinwasserspeicher 11 und von dort zum Bezüger; das Konzentrat fliesst über die Konzentratabflussleitung 4 ab. Die Restleitfähigkeit des Reinwassers kann mittels einer Leitfähigkeitsmessonde 21 überwacht werden, die vorzugsweise am Reinwasserspeicher 11 oder in der Reinwasserleitung 5 zwischen dem Rückschlagventil 20 und dem Reinwasserspeicher 11 angeordnet ist. Wenn Ventil 9 geschlossen wird, wird das produzierte Reinwasser im Reinwasserspeicher 11 gespeichert, bis der mittels Druckfühler 22 gemessene Druck einen festgelegten oberen Wert erreicht, der niedriger ist als der Druck des der Membraneinheit 2 zugeführten Speisewassers, und dann die Reinwasserproduktion unterbrochen.

Nach der Unterbrechung der Reinwasserproduktion kann gewünschtenfalls zuerst die Speisewasserseite 7 der Membraneinheit 2 von kolloidalen Verunreinigungen gereinigt werden. Vorzugsweise kann hierzu in der Reinwasserleitung 5 zwischen der Membraneinheit 2 und der Bypassleitung 24 ein in Figur 3 nicht gezeigtes Sperrventil angeordnet werden, das während der vorangehenden Reinwasserproduktion und während der nachfolgenden Reinigung der Membran 1 geöffnet ist und das nun zur Unterbrechung der Reinwasserproduktion geschlossen wird. Die gesamte der Membraneinheit 2 zugeführte Speisewassermenge fliesst nun an der Membran 1 vorbei zur Konzentratabflussleitung 4 und spült allfällige Verunreinigungen aus der Speisewasserseite 7 fort. Ein Sperrventil in der Reinwasserleitung 5 erübrigt sich, wenn die Reinwasserproduktion solange aufrechterhalten wird, bis der maximal mögliche Reinwasserdruck erreicht ist, oder auf eine Spülung der Speisewasserseite 7 verzichtet wird.

Zur Unterbrechung des Spülvorgangs bzw. zur Unterbrechung der Reinwasserproduktion, wenn keine Spülung der Speisewasserseite 7 erfolgt, wird Sperrventil 6 geschlossen und gleichzeitig Entlastungsventil 19 in der zwischen der Membraneinheit 2 und der Bypassleitung 24 an die Reinwasserleitung 5 angeschlossenenen Abzweigungsleitung 17 geöffnet. Ein allenfalls in der Reinwasserleitung 5 angeordnetes Sperrventil wird wieder geöffnet. Dadurch werden die Speisewasserseite 7 und die Reinwasserseite 8 vom statischen Druck entlastet, während Rückschlagventil 20 schliesst und den statischen Druck im Reinwasserspeicher 11 aufrechterhält. Reinwasser diffundiert nun unter dem Einfluss des osmotischen Druckunterschiedes von der Reinwasserseite 8 zur Speisewasserseite 7, wobei Reinwasser aus dem Reinwasserspeicher 11 in kleinen Mengen über die Bypassleitung 24 und das Drosselventil 23 zur Reinwasserseite 8 nachfliessen nach. Das Drosselventil 23 ist zweckmässigerweise so dimensioniert, dass die durch das Drosselventil 23 zurückfliessende Reinwassermenge leicht höher ist als die durch die semipermeable Membran 1 zurückdiffundierende Reinwassermenge, wobei die überschüssige Menge über die Abzweigungsleitung 17 in den Abfluss geleitet wird. Wenn der Druck im Reinwasserspeicher 11 den festgelegten unteren Wert erreicht, wird Sperrventil 6 geöffnet und Entlastungsventil 19 geschlossen, womit die Rückdiffusion von Reinwasser gestoppt wird und ein neuer Zyklus der Reinwasserproduktion beginnt. Es versteht sich, dass das Fassungsvermögen des Reinwasserspeichers 11 und der Abstand zwischen dem unteren und oberen Schaltpunkt des Druckfühlers 22 genügend gross gewählt werden sollen, um die Rückdiffusion einer ausreichenden Menge Reinwasser zu gewährleisten.

Auf die in Figur 3 gezeigte Hockdruckpumpe 16 kann gewünschtenfalls verzichtet und das Verfahren in der vorangehend beschriebenenen Weise durchgeführt werden, wenn das Speisewasser unter ausreichendem Druck zur Verfügung steht. Bei Verwendung einer Hochdruckpumpe 16 unterscheidet sich das Verfahren vom vorangehend beschriebenen lediglich insofern, als auf ein Sperrventil in der Reinwasserleitung 5 verzichtet werden kann und die Hochdruckpumpe 16 bei der Unterbrechung der Reinwasserproduktion ausgeschaltet und bei der Aufnahme bzw. Wiederaufnahme der Reinwasserproduktion zeitverzögert zum Öffnen des Sperrventils 6 wieder eingeschaltet wird. Durch das zeitverzögerte Einschalten der Hochdruckpumpe 16 wird vermieden, dass die Pumpe kavitiert, solange der nötige Vordruck nicht vorhanden ist. Um die Pumpe zusätzlich zu schützen, kann in der Speisewasserleitung 3 zwischen dem Sperrventil 6 und der Hochdruckpumpe 16 vorzugsweise ein Druckfühler vorgesehen werden, der die Pumpe ausschaltet bzw. ein Einschalten der Pumpe verhindert, wenn der Druck einen festgelegten unteren Wert nicht erreicht.

In der in Figur 4 gezeigten Vorrichtung fliesst beim Öffnen des Ventils 9 einer Zapfstelle Reinwasser aus dem offenen Reinwasserspeicher 25 über eine Verbindungsleitung zum Verbraucher. In der Verbindungsleitung ist vorzugsweise eine Pumpe 29 angeordnet, um das Reinwasser unter ausreichendem Druck zur Zapfstelle 9 zu transportieren. Wenn die im Reinwasserspeicher 25 gespeicherte Reinwassermenge einen festgelegten unteren Grenzwert entsprechend dem unteren Schaltpunkt 27 des Niveaufühlers 26 erreicht, wird das Sperrventil 6 geöffnet, womit Speisewasser unter Druck in die Membraneinheit 2 strömt und in einen Reinwasserstrom und einen Konzentratstrom aufgeteilt wird. Die Reinwasserausbeute ist durch die Einstellung des WCF-Ventils 15 vorgegeben. Das Reinwasser fliesst bei geöffnetem Sperrventil 30 über die Reinwasserleitung 5 in den Reinwasserspeicher 25 und von dort zum Bezüger; das Konzentrat fliesst über die Konzentratabflussleitung 4 ab. Die Restleitfähigkeit des Reinwassers kann mittels einer am Reinwasserspeicher 25 oder in der Reinwasserleitung 5 angeordneten Leitfähigkeitsmessonde 21 überwacht werden. Wenn Ventil 9 geschlossen wird, wird das produzierte Reinwasser im Speicher 25 gespeichert, bis die gespeicherte Reinwassermenge einen festgelegten oberen Grenzwert entsprechend dem oberen Schaltpunkt 28 des Niveaufühlers 26 erreicht, und dann die Reinwasserproduktion unterbrochen.

Nach der Unterbrechung der Reinwasserproduktion kann gewünschtenfalls zuerst die Speisewasserseite 7 der Membraneinheit 2 von kolloidalen Verunreinigungen gereinigt werden (gewünschtenfalls kann die Spülung der Speisewasserseite 7 auch nach der Membranreinigung vor Wiederaufnahme der Reinwasserproduktion erfolgen). Hierzu wird Sperrventil 30 in der Reinwasserleitung 5 geschlossen, wodurch die Reinwasserproduktion unterbrochen und die gesamte, der Membraneinheit 2 zugeführte Reinwassermenge an der semipermeablen Membran 1 vorbei zur Konzentratabflussleitung 4 strömt und allfällige Verunreinigungen wegspült. Wird auf eine Spülung der Speisewasserseite 7 verzichtet, erübrigt sich im Prinzip das Sperrventil 30 in der Reinwasserleitung 5.

Zur Unterbrechung des Spülvorgangs bzw. zur Unterbrechung der Reinwasserproduktion, wenn vor der Membranreinigung keine Spülung der Speisewasserseite 7 erfolgt, wird Sperrventil 6 in der Speisewasserleitung 3 geschlossen und ein gegebenenfalls in der Reinwasserleitung 5 vorhandenes Sperrventil 30 geöffnet. Dadurch wird die Speisewasserseite 7 vom statischen Druck entlastet, und Reinwasser beginnt unter dem Einfluss des osmotischen Druckunterschiedes von der Reinwasserseite 8 durch die semipermeable Membran 1 zur Speisewasserseite 7 zurückzudiffundieren, wobei Reinwasser vom Reinwasserspeicher 25 über die Reinwasserleitung 5 zur Reinwasserseite 8 der Membraneinheit 2 nachfliesst. Allfällige Höhenunterschiede zwischen der Membraneinheit 2 und dem Reinwasserspeicher 25 sollten vergleichsweise gering gehalten werden, so dass durch einen allenfalls höher gelegenen Reinwasserspeicher 25 kein wesentlicher Druck auf die Reinwasserseite 8 ausgeübt wird bzw. bei einem tiefer gelegenen Reinwasserspeicher 25 Reinwasser aufgrund des HeberPrinzips noch zur Reinwasserseite 8 zurückfliessen kann und die Rückdiffusion durch die Membran 1 nicht wesentlich beeinträchtigt wird. Ferner sollte der Anschluss der Reinwasserleitung 5 unter dem unteren Schaltpunkt 27 des Niveaufühlers 26 des Reinwasserspeichers 25 angebracht sein, damit die Reinwasserleitung 5 immer mit Wasser gefüllt ist. Die Rückdiffusion stoppt, wenn die Konzentrationen auf der Speisewasserseite 7 und der Reinwasserseite 8 ausgeglichen sind. Die Rückdiffusion wird ebenfalls gestoppt, wenn die Reinwassermenge im Reinwasserspeicher 25 den unteren Grenzwert entsprechend dem unteren Schaltpunkt 27 des Niveaufühlers 26 erreicht und Sperrventil 6 geöffnet wird, womit die Reinwasserproduktion erneut beginnt.

Auf die in Figur 4 gezeigte Hochdruckpumpe 16 kann gewünschtenfalls verzichtet und das Verfahren in der vorangehend beschriebenen Weise durchgeführt werden, wenn das Speisewasser unter ausreichendem Druck zur Verfügung steht. Bei Verwendung einer Hochdruckpumpe 16 unterscheidet sich das Verfahren vom vorangehend beschriebenen lediglich insofern, als die Hochdruckpumpe 16 bei der Unterbrechung der Reinwasserproduktion ausgeschaltet und bei der Aufnahme bzw. Wiederaufnahme der Reinwasserproduktion zeitverzögert zum Öffnen des Sperrventils 6 wieder eingeschaltet wird. Ein verzögertes Einschalten der Hochdruckpumpe 16 empfiehlt sich, um zu vermeiden, dass die Pumpe kavitiert, solange der nötige Vordruck nicht vorhanden ist. Um die Pumpe zusätzlich zu schützen, kann in der Speisewasserleitung 3 zwischen dem Sperrventil 6 und der Hochdruckpumpe 16 vorzugsweise ein Druckfühler vorgesehen werden, der die Pumpe ausschaltet bzw. ein Einschalten der Pumpe verhindert, wenn der Druck einen festgelegten unteren Wert nicht erreicht.

## Patentansprüche

1. Verfahren zur Reinwasserherstellung mittels Umkehrosmose, in welchem zur Erzeugung von Reinwasser salzhaltiges Speisewasser unter Druck einer Membraneinheit (2) mit wenigstens einer semipermeablen Membran (1), die die Membraneinheit (2) in eine Speisewasserseite (7) und eine Reinwasserseite (8) unterteilt, zugeführt wird, wobei eine Teilmenge des Speisewassers unter der treibenden Kraft einer Druckdifferenz die Membran (1) als Reinwasser passiert und die Restmenge des an der Membran (1) vorbeiströmenden Speisewassers die Membraneinheit (2) als Konzentrat verlässt, und in welchem zur Reinigung der Membran (1) periodisch Reinwasser von der Reinwasserseite (8) durch die Membran (1) zur Speisewasserseite (7) geleitet wird, dadurch gekennzeichnet, dass zur Reinigung der Membran (1) die Speisewasserzufuhr unterbrochen und Reinwasser während mindestens 5 Minuten im wesentlichen in Abwesenheit eines statischen Druckgefälles zwischen der Reinwasserseite (8) und der Speisewasserseite (7) der Membraneinheit (2) unter der Wirkung des osmotischen Druckgefälles von der Reinwasserseite (8) zur Speisewasserseite (7) zurückdiffundiert.

2. Verfahren nach Anspruch 1, dadurch gekennzeichnet, dass die Reinigung der Membran (1) zur Entfernung von Ausfällungen dient, die durch Überschreiten des Löslichkeitsproduktes entstanden sind.

3. Verfahren nach Anspruch 1 oder 2, dadurch gekennzeichnet, dass während der Reinigung der Membran (1) die Speisewasserseite (7) und die Reinwasserseite (8) der Membraneinheit (2) im wesentlichen vom statischen Druck entlastet sind.

4. Verfahren nach einem der Ansprüche 1 bis 3, dadurch gekennzeichnet, dass während der Erzeugung von Reinwasser Reinwasser von der Reinwasserseite (8) über eine Verbindungsleitung (5, 17) in einen Reinwasserbehälter (10, 11, 25) fliesst und aus diesem während der Reinigung der Membran (1) zur Reinwasserseite (8) der Membraneinheit (2) zurückfliesst.

5. Verfahren nach einem der Ansprüche 1 bis 6, dadurch gekennzeichnet, dass während der Erzeugung von Reinwasser Reinwasser unter Druck über eine an die Reinwasserseite (8) der Membraneinheit (2) angeschlossene und mit einem Rückschlagventil (20) versehene Reinwasserleitung (5) in einen geschlossenen Reinwasserspeicher (11) fliesst, aus dem Reinwasser über wenigstens eine an den Reinwasserspeicher (11) angeschlossene Zapfstelle (9) entnommen werden kann, und dass das Rückschlagventil (20) schliesst, wenn der Druck auf der Reinwasserseite (8) der Membraneinheit (2) unter den Druck im Reinwasserspeicher (11) abfällt.

6. Verfahren nach Anspruch 5, dadurch gekennzeichnet, dass der Reinwasserspeicher (11) als Reinwasserbehälter dient, aus dem während der Reinigung der Membran (1) Reinwasser über eine mit einem Drosselventil (23) versehene Bypassleitung (24), die das Rückschlagventil (20) überbrückt, zur Reinwasserseite (8) der Membraneinheit (2) zurückfliesst, und dass in der Reinwasserleitung (5) oder in einer Abzweigungsleitung (17) der Reinwasserleitung (5) zwischen der Bypassleitung (24) und der Membraneinheit (2) ein Entlastungsventil (19) angeordnet ist, das während der Erzeugung von Reinwasser geschlossen und während der Reinigung der Membran (1) geöffnet ist.

7. Verfahren nach Anspruch 5, dadurch gekennzeichnt, dass in der Reinwasserleitung (5) oder in einer Abzweigungsleitung (17) der Reinwasserleitung (5) zwischen der Membraneinheit (2) und dem Rückschlagventil (20) ein Spülbehälter (10) angeordnet ist, in den während der Erzeugung von Reinwasser Reinwasser fliesst und aus dem während der Reinigung der Membran (1) Reinwasser zur Reinwasserseite (8) der Membraneinheit (2) zurückfliesst.

8. Verfahren nach Anspruch 7, dadurch gekennzeichnet, dass der Spülbehälter (10) an seinem oberen Ende ein Entlastungsventil (19) oder eine Leitung mit einem Entlastungsventil (19) aufweist, das während der Reinigung der Membran (1) geöffnet ist und während der Erzeugung von Reinwasser geschlossen wird, sobald der Spülbehälter (10) ausreichend mit Reinwasser gefüllt ist.

9. Verfahren nach Anspruch 8, dadurch gekennzeichnet, dass der Spülbehälter (10) in einer zwischen der Membraneinheit (2) und dem Rückschlagventil (20) an die Reinwasserleitung (5) angeschlossenen Abzweigungsleitung (17) angeordnet ist und die Abzweigungsleitung (17) zwischen dem Spülbehälter (10) und der Reinwasserleitung (5) ein Ventil aufweist, das schliesst, sobald Luft angesaugt wird.

10. Verfahren nach Anspruch 7, dadurch gekennzeichnet, dass der Spülbehälter (10) aus einem flexiblen, nicht dehnbaren Material besteht.

11. Verfahren nach einem der Ansprüche 5 bis 10, dadurch gekennzeichnet, dass Speisewasser der Membraneinheit (2) über eine an die Speisewasserseite (7) angeschlossene und mit einem Sperrventil (6) versehene Speisewasserleitung (3) zugeführt wird und der Wasserdruck im Reinwasserspeicher (11) mittels eines Druckfühlers (22) gemessen wird und dass das Sperrventil (6) geschlossen wird, wenn der mittels des Druckfühlers gemessene Druck einen festgelegten oberen Wert erreicht, bzw. das Sperrventil (6) geöffnet wird, wenn der mittels des Druckfühlers (22) gemessene Druck einen festgelegten unteren Wert erreicht.

12. Verfahren nach einem der Ansprüche 5 bis 10, dadurch gekennzeichnet, dass Speisewasser der Membraneinheit (2) über eine an die Speisewasserseite (7) angeschlossene und mit einem Sperrventil (6) versehene Speisewasserleitung (3) zugeführt wird, in der zwischen dem Sperrventil (6) und der Membraneinheit (2) eine Hochdruckpumpe (16) angeordnet ist, und der Wasserdruck im Reinwasserspeicher (11) mittels eines Druckfühlers (22) gemessen wird, und dass die Hochdruckpumpe (16) ausgeschaltet wird, wenn der mittels des Druckfühlers (22) gemessene Druck einen festgelegten oberen Wert erreicht, womit der Membraneinheit (2) zugeführtes Speisewasser an der Membran (1) vorbeiströmt und Verunreinigungen aus der Speisewasserseite (7) ausspült, bis das Sperrventil (6) geschlossen wird, bzw. das Sperrventil (6) geöffnet und die Hochdruckpumpe (16) eingeschaltet wird, wenn der mittels Druckfühler (22) gemessene Druck einen festgelegten unteren Wert erreicht.

13. Verfahren nach Anspruch 4, dadurch gekennzeichnet, dass während der Erzeugung von Reinwasser Reinwasser über eine an die Reinwasserseite (8) der Membraneinheit (2) angeschlossene Reinwasserwasserleitung (5) in einen offenen Reinwasserspeicher (25) fliesst und aus diesem während der Reinigung der Membran (1) zur Reinwasserseite (8) der Membraneinheit zurückfliesst.

14. Verfahren nach Anspruch 13, dadurch gekennzeichnet, dass Speisewasser der Membraneinheit (2) über eine an der Speisewasserseite (7) angeschlossene und mit einem Sperrventil (6) versehene Speisewasserleitung (3) zugeführt und die Reinwassermenge im Reinwasserspeicher (25) mittels eines Niveaufühlers (26) gemessen wird und dass das Sperrventil (6) geschlossen wird, wenn die Reinwassermenge einen festgelegten oberen Wert (28) erreicht, bzw. das Sperrventil (6) geöffnet wird, wenn die Reinwassermenge einen festgelegten unteren Wert (27) erreicht.

15. Verfahren nach Anspruch 13, dadurch gekennzeichnet, dass Speisewasser der Membraneinheit (2) über eine an der Speisewasserseite (7) angeschlossene und mit einem Sperrventil (6) versehene Speisewasserleitung (3) zugeführt wird, in der zwischen dem Sperrventil (6) und der Membraneinheit (2) eine Hochdruckpumpe (16) angeordnet ist, und die Reinwassermenge im Reinwasserspeicher (25) mittels eines Niveaufühlers (26) gemessen wird und dass ein in der Reinwasserleitung (5) angeordnetes Sperrventil (30) geschlossen und die Hochdruckpumpe (16) ausgeschaltet wird, wenn die Reinwassermenge einen festgelegten oberen Wert (28) erreicht, womit der Membraneinheit (2) zugeführtes Speisewasser an der Membran (1) vorbeiströmt und Verunreinigungen aus der Speisewasserseite (7) ausspült, bis das Sperrventil (6) in der Speisewasserleitung (3) geschlossen und das Sperrventil (30) in der Reinwasserleitung (5) geöffnet wird, bzw. das Sperrventil (6) in der Speisewasserleitung (3) geöffnet und die Hochdruckpumpe (16) eingeschaltet wird, wenn die Reinwassermenge einen festgelegten unteren Wert (27) erreicht.

16. Vorrichtung zur Reinwasserherstellung gemäss dem Verfahren der Ansprüche 1 bis 4, gekennzeichnet durch eine Membraneinheit (2) mit wenigstens einer semipermeablen Membran (1), die die Membraneinheit (2) in eine Speisewasserseite (7) und eine Reinwasserseite (8) unterteilt, eine an die Speisewasserseite (7) angeschlossene und mit einem Sperrventil (6) versehene Speisewasserleitung (3) zur Zufuhr von Speisewasser unter Druck, eine an die Speisewasserseite (7) angeschlossene Konzentratabflussleitung (4), eine an die Reinwasserseite (8) angeschlossene Reinwasserleitung (5) und einen über eine Verbindungsleitung (5, 17) an die Reinwasserseite (8) angeschlossenen Reinwasserbehälter (10, 11, 25) zur Aufnahme von erzeugtem Reinwasser bzw. zur Rückführung von Reinwasser zur Reinwasserseite (8), wenn Sperrventil (6) geschlossen ist.

17. Vorrichtung nach Anspruch 16, dadurch gekennzeichnet, dass in der Konzentratabflussleitung (4) ein Ventil (15) zur Steuerung des Druckabfalls angeordnet ist.

18. Vorrichtung nach Anspruch 16 oder 17, dadurch gekennzeichnet, dass die Reinwasserleitung (5) die Reinwasserseite (8) der Membraneinheit (2) mit einem geschlossenen Reinwasserspeicher (11) verbindet, in dem Reinwasser unter Druck gespeichert und aus dem Reinwasser über wenigstens eine an den Reinwasserspeicher (11) angeschlossene Zapfstelle (9) entnommen werden kann, und in der Reinwasserleitung (5) ein Rückschlagventil (20) angeordnet ist, das schliesst, wenn der Wasserdruck auf der Reinwasserseite (8) der Membraneinheit (2) unter den Wasserdruck im Reinwasserspeicher (11) abfällt.

19. Vorrichtung nach Anspruch 18, dadurch gekennzeichnet, dass das Rückschlagventil (20) durch eine Bypassleitung (24) mit einem Drosselventil (23) überbrückt ist und in der Reinwasserleitung (5) oder in einer Abzweigungsleitung (17) der Reinwasserleitung (5) zwischen der Membraneinheit (2) und der Bypassleitung (24) ein Entlastungsventil (19) angeordnet ist, das geschlossen ist, wenn das Sperrventil (6) in der Speisewasserleitung (3) geöffnet ist, und das geöffnet ist, wenn das Sperrventil (6) in der Speisewasserleitung (3) geschlossen ist.

20. Vorrichtung nach Anspruch 18, dadurch gekennzeichnet, dass in der Reinwasserleitung (5) oder in einer Abzweigungsleitung (17) der Reinwasserleitung (5) zwischen der Membraneinheit (2) und dem Rückschlagventil (20) zur Aufnahme bzw. Rückführung von Reinwasser ein Spülbehälter (10) angeordnet ist, der an seinem oberen Ende ein Entlastungsventil (19) oder Leitung mit einem Entlastungsventil (19) aufweist oder aus einem flexiblen, nicht dehnbaren Material besteht, wobei das Entlastungsventil (19) offen ist, wenn das Sperrventil (6) in der Speisewasserleitung (3) geschlossen ist, und das Entlastungsventil (19) bei offenem Sperrventil (6) in der Speisewasserleitung (3) schliessbar ist, wenn eine ausreichende Menge Reinwasser im Spülbehälter (10) gespeichert ist.

21. Vorrichtung nach einem der Ansprüche 18 bis 20, dadurch gekennzeichnet, dass am Reinwasserspeicher (11) oder in der Reinwasserleitung (5) zwischen dem Rückschlagventil (20) und dem Reinwasserspeicher (11) ein Druckfühler (22) zur Messung des Wasserdrucks angeordnet ist und das Sperrventil (6) in der Speisewasserleitung (3) in Abhängigkeit des mittels des Druckfühlers (22) gemessenen Druckes so geschaltet ist, dass es geöffnet wird, wenn der Druck einen festgelegten oberen Wert erreicht, bzw. geschlossen wird, wenn der Druck einen festgelegten unteren Wert erreicht.

22. Vorrichtung nach einem der Ansprüche 18 bis 20, dadurch gekennzeichnet, dass in der Speisewasserleitung (3) zwischen dem Sperrventil (6) und der Membraneinheit (2) eine Hochdruckpumpe (16) und am Reinwasserspeicher (11) oder in der Reinwasserleitung (5) zwischen dem Rückschlagventil (20) und dem Reinwasserspeicher (11) ein Druckfühler (22) zur Messung des Wasserdrucks angeordnet sind und dass die Hochdruckpumpe (16) und das Sperrventil (6) in der Speisewasserleitung (3) in Abhängigkeit des mittels des Druckfühlers (22) gemessenen Druckes so geschaltet sind, dass die Hochdruckpumpe (16) ausgeschaltet und nach einem zur Spülung der Speisewasserseite (7) der Membraneinheit (2) ausreichenden Zeitintervall das Sperrventil (6) geschlossen wird, wenn der Druck einen festgelegten oberen Wert erreicht, bzw. das Sperrventil (6) geöffnet und die Hochdruckpumpe (16) eingeschaltet wird, wenn der Druck einen festgelegten unteren Wert erreicht.

23. Vorrichtung nach Anspruch 16 oder 17, dadurch gekennzeichnet, dass die Reinwasserleitung (5) die Reinwasserseite (8) der Membraneinheit (2) mit einem offenen Reinwasserspeicher (25) verbindet, aus dem Reinwasser über wenigstens eine an den Reinwasserspeicher (25) angeschlossene Zapfstelle (9) entnommen werden kann und der zugleich als Reinwasserbehälter zur Aufnahme bzw. Rückführung von Reinwasser dient.

24. Vorrichtung nach Anspruch 23 dadurch gekennzeichnet, dass der Reinwasserspeicher (25) einen Niveaufühler (26) zur Überwachung der gespeicherten Reinwassermenge aufweist und das Sperrventil (6) in der Speisewasserleitung (3) in Abhängigkeit der gespeicherten Reinwassermenge so geschaltet ist, dass das Sperrventil (6) schliesst, wenn die Reinwassermenge einen festgelegten oberen Wert (28) erreicht, bzw. öffnet, wenn die Reinwassermenge einen festgelegten unteren Wert (27) erreicht.

25. Vorrichtung nach Anspruch 24, dadurch gekennzeichnet, dass in der Speisewasserleitung (3) zwischen dem Sperrventil (6) und der Membraneinheit (2) eine Hochdruckpumpe (16) und in der Reinwasserleitung (5) ein Sperrventil (30) angeordnet sind und der Reinwasserspeicher (25) einen Niveaufühler (26) zur Überwachung der gespeicherten Reinwassermenge aufweist und dass die Sperrventile (6, 30) und die Hochdruckpumpe (16) in Abhängigkeit der gespeicherten Reinwassermenge so geschaltet sind, dass das Sperrventil (30) in der Reinwasserleitung (5) schliesst, die Hochdruckpumpe (16) ausgeschaltet wird und nach einem zur Spülung der Speisewasserseite (7) der Membraneinheit (2) ausreichenden Zeitintervall das Sperrventil (6) in der Speisewasserleitung (3) schliesst, wenn die Reinwassermenge einen festgelegten oberen Wert (28) erreicht, bzw. die Sperrventile (6, 30) öffnen und die Hochdruckpumpe (16) eingeschaltet wird, wenn die Reinwassermenge einen festgelegten unteren Wert (27) erreicht.
